# EUROPÄISCHE PATENTANMELDUNG

(11) **EP 1 625 974 A2**
(43) Veröffentlichungstag der Anmeldung: **15.02.2006**
(21) Anmeldenummer: 05023131.5
(22) Anmeldetag: 31.08.2000
(51) Int. Cl.: B60R 11/02

(54) **Anordnung zum Betrieb eines Handfunkgerätes**

(30) Priorität: 14.09.1999 DE 19944064; 24.02.2000 DE 10008751
(62) Teilanmeldung aus: 00965801.4
(71) Anmelder: Peiker, Andreas, 61381 Friedrichsdorf/Ts (DE)
(72) Erfinder: Peiker, Andreas, 61381 Friedrichsdorf/Ts (DE)
(74) Vertreter: Otten, Herbert

(57) **Zusammenfassung**

Die Erfindung betrifft eine Anordnung (1) zum Betrieb von portablen, elektronischen Geräten (2) wie Handfunkgerät (2a), Organizer (2b) (PDA) oder dergleichen in Fahrzeugen (3). Hierbei ist die Bildung einer Funktionseinheit (6) vorgesehen, die in einer Getränke-Haltevorrichtung angeordnet ist.

## Beschreibung

Die Erfindung betrifft eine Anordnung zum Betrieb von portablen, elektronischen Geräten nach dem Oberbegriff des Anspruchs 1.

Es sind eine Vielzahl von Anordnungen zum Betrieb von Funktelefonen in Fahrzeugen bekannt. Zum Beispiel gibt es Halterungen für Funktelefone, die das Funktelefon in einer schalenartigen Aufnahme aufnehmen, die entweder auf dem Beifahrersitz abgelegt wird oder in eine fest im Fahrzeug zu installierende Grundplatte eingehängt wird. Derartige Halterungen haben den Nachteil, dass das Funktelefon störend im Fahrzeug herumliegt und bei einem Bremsvorgang unter Umständen zusammen mit der Aufnahme auf den Boden fällt oder die Grundplatte fest mit dem Fahrzeug verbunden ist und somit nicht in ein anderes Fahrzeug mitgenommen werden kann. Weiterhin ist es bekannt Zusatzeinrichtungen wie eine Freisprecheinrichtung über eine Vielzahl von Kabeln mit der Halterung bzw. dem Funktelefon zu verbinden. Eine derartige Zusatzeinrichtung liegt entweder ebenfalls im Fahrzeug herum oder muss fest mit dem Fahrzeug verbunden werden, was wiederum eine Mitnahme unmöglich macht.

Der Erfindung liegt die Aufgabe zugrunde, eine Anordnung zum Betrieb von portablen, elektronischen Geräten in Fahrzeugen zu entwickeln, die sich mit einer Vielzahl von Gerätetypen in praktisch jedem Fahrzeug ohne Montageaufwand realisieren lässt, somit mit minimalem Aufwand von einem Fahrzeug in ein anderes Fahrzeug mitgenommen werden kann und die für eine elektronische Zusammenschaltung mit weiteren elektronischen Einheiten vorgesehen ist.

Aufgabe der Erfindung ist es insbesondere, ein mobiles, transportables, universell einsetzbares, vielseitiges Zubehörteil für ein Handfunkgerät zu schaffen, das kompakte Abmessungen aufweist und vielfältige Funktionen in einer modernen Kommunikationsumgebung zur Verfügung stellt und/oder unterstützt.

Diese Aufgabe wird in Verbindung mit den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Die erfindungsgemäße Anordnung zum Betrieb von portablen, elektronischen Geräten schlägt vor, dass
- mindestens ein portables, elektronisches Gerät, das als Funktelefon und/oder Organizer bzw. Personal Digital Assistent (PDA) ausgebildet ist, weitestgehend senkrecht oder leicht schräg in eine als Vertiefung bzw. Rücksprung ausgebildete Ausnehmung einer transportablen Integrationseinheit in einer linearen Bewegungsrichtung einstellbar ist,
- wobei die Integrationseinheit im Wesentlichen die Form eines geometrischen Körpers, insbesondere eines zylindrischen oder prismatischen Körpers aufweist, so dass diese in eine in dem Fahrzeug vorgesehene Getränke-Haltevorrichtung für Dosen und/oder Flaschen einstellbar ist,
- wobei die Integrationseinheit zur wenigstens vorübergehenden elektronischen Zusammenschaltung des portablen, elektronischen Gerätes mit mindestens einer in der Integrationseinheit angeordneten weiteren elektronischen Komponente, wie einer Freisprecheinrichtung und/oder einem Ladegerät dient,

wobei das mindestens eine portable, elektronische Gerät und die Integrationseinheit mit der mindestens einen elektronischen Komponente wenigstens eine Funktionseinheit bilden.

Durch diese Anpassung der Integrationseinheit an vorhandene Getränke-Haltevorrichtungen ist es möglich, die Integrationseinheit z.B. in einem Armaturen- und/oder Cockpit- und/oder Konsolenbereich des Fahrzeugs anzuordnen. Das heißt, die Integrationseinheit kann unter Vermeidung des Einsatzes einer Befestigungs- bzw. Grundplatte auch in einem Bereich angeordnet werden, der an sich schon vollständig mit Funktionselementen belegt ist und keine Möglichkeiten für eine Verschraubung, Verklebung oder Saugknopfbefestigung einer zusätzliche Halterung bietet. Weiterhin bietet die Integrationseinheit die Möglichkeit, gemeinsam mit dem Funktelefon vom Nutzer mitgenommen zu werden, so dass die Integrationseinheit den Nutzer wie ein universeller Adapter auf Reisen und im Alltag überall hin begleitet. Die Integrationseinheit stellt beispielsweise im Mietwagen oder im Zug eine Infrastruktur für das Funktelefon zur Verfügung, die in kürzester Zeit durch Einstellen der Integrationseinheit in eine ohnehin bereits vorhandene Getränke-Haltevorrichtung installiert und deinstalliert werden kann. Durch den Einsatz von Funktelefon, Integrationseinheit und beispielsweise einer in der Integrationseinheit als elektronische Komponente angeordneten Freisprecheinrichtung entsteht somit eine Funktionseinheit.

Als Freisprecheinrichtung ermöglicht die Integrationseinheit dem Nutzer über ein der Integrationseinheit zugeordnetes Mikrofon und über einen der Integrationseinheit zugeordneten Lautsprecher über eine vom Funktelefon bereitgestellte Kommunikationsverbindung zu kommunizieren, ohne das Handfunkgerät in die Nähe von Ohr und Mund halten zu müssen. Bei einer solchen Freisprecheinrichtung wird der im Handfunkgerät eingebaute Lautsprecher durch den der Integrationseinheit zugeordneten Lautsprecher ersetzt. Ebenso wird die Funktion des im Handfunkgerät angeordneten Mikrofons durch das der Integrationseinheit zugeordnete Mikrofon übernommen.

Eine vorteilhafte Ausbildung des Erfindungsgegenstandes sieht vor, die Verbindung zwischen dem portablen, elektronischen Gerät und der Integrationseinheit als Funkverbindung auszubilden, die im Milliwattbereich arbeitet und vorzugsweise als sogenannte "blue tooth" Verbindung oder Infrarot-Verbindung ausgebildet ist. Hierdurch wird die mechanische Kontaktierung des portablen, elektronischen Gerätes überflüssig und somit entfallen Probleme mit Fehlkontaktierungen. Gegebenenfalls ist es vorgesehen das portable, elektronische Gerät mit einer Stromversorgung zu kontaktieren.

Gemäß einer besonderen Ausführungsform ist vorgesehen, Funktionseinheiten zwischen der Integrationseinheit und portablen, elektronischen Geräten und elektronischen Komponenten in Abhängigkeit von vorgegebenen und/oder erfassten und/oder übermittelten Informationen zu bilden. Hierdurch ist es möglich mit Hilfe der Integrationseinheit und der beigeordneten Einheiten verschiedenste Aufgaben zu erfüllen, für die sonst unterschiedliche spezialisierte Geräte erforderlich sind.

Eine vorteilhafte Ausbildung des Erfindungsgegenstandes sieht in der Integrationseinheit einen angepassten Aufnahmeraum zum Einstellen des portablen, elektronischen Gerätes vor. Dieser ist vorzugsweise als Einstecköffnung ausgebildet, die das portable, elektronische Gerät vorzugsweise in einem unteren Bereich umgreift, wobei das Umgreifen des portablen, elektronischen Gerätes in seinem Frontbereich vorzugsweise nur in einem Bereich erfolgt, der nicht von Tasten oder einem Monitor belegt ist. Durch eine derartige Aufnahme des portablen, elektronischen Gerätes ist dieses auch bei unvorhergesehenen Bewegungen der Umgebung sicher gehalten und bietet trotzdem Zugriff auf alle Tasten und freien Blick auf den Bildschirm.

Gemäß einer besonderen Ausführungsform ist vorgesehen, für die Integrationseinheit einen speziellen Einsatz oder ein Adapterelement vorzusehen, der den Aufnahmeraum und/oder die Kontaktanordnung im Aufnahmeraum auf die Außenabmessungen bzw. die Kontaktanordnung des portablen, elektronischen Gerätes anpasst. Durch diesen Einsatz ist es möglich, die Integrationseinheit mit minimalem Aufwand auf die verschiedensten portablen, elektronischen Geräte anzupassen.

Eine Modifikation des Erfindungsgegenstandes sieht vor, dem portablen, elektronischen Gerät im Aufnahmeraum der Integrationseinheit Stützvorrichtungen zuzuordnen, die das portable, elektronische Gerät im eingesteckten Zustand in dessen Rückbereich und/oder Seitenbereichen und/oder Frontbereich ganz oder teilweise stützen. Durch solche Stützvorrichtungen ist es gewährleistet, dass Funktionstasten des portablen, elektronischen Gerätes kräftig gedrückt werden können, ohne dass die Gefahr besteht, dass dieses dem Druck ausweicht.

Es ist von besonderem Vorteil, wenn das portable, elektronische Gerät durch eine Klemmvorrichtung und/oder Rastvorrichtung zur kraft- und/oder formschlüssigen Befestigung in der Integrationseinheit gehalten ist. Hierdurch wird die Verbindung zwischen den Kontakten des portablen, elektronischen Gerätes und den Kontakten der Integrationseinheit von mechanischen Belastungen frei gehalten, so dass dem Verbiegen von Kontakten wirksam vorgebeugt ist. Weiterhin erfolgt bei einer formschlüssigen Verbindung beispielsweise ein Einschnappen von Rastnasen, so dass die korrekte Kupplung des portablen, elektronischen Gerätes mit der Integrationseinheit durch ein Rastgeräusch, ein Einrastempfinden oder die Stellung einer Entriegelungstaste leicht festgestellt werden kann.

Erfindungsgemäß wird weiter vorgeschlagen, die Integrationseinheit, die angenähert die Form eines geometrischen, insbesondere zylindrischen oder prismatischen Körpers aufweist in einem Fußbereich mit einem Durchmesser von etwa 55 mm bis 75 mm auszubilden, der auf den Durchmesser der Getränke-Haltevorrichtung angepasst ist. Somit ist ein sicherer Sitz der Integrationseinheit durch einfaches Einstellen in die Haltevorrichtung möglich.

Eine Modifikation des Erfindungsgegenstandes sieht vor, die Integrationseinheit mit mindestens einer Anzeigevorrichtung und/oder einer Taste oder Tastenanordnung zu versehen. Durch die Anzeigevorrichtung ist es beispielsweise möglich, dem Nutzer anzuzeigen welche Funktionseinheit zur Zeit gebildet ist. Mit der Taste oder der Tastenanordnung ist es möglich zwischen Funktionseinheiten umzuschalten. Weiterhin kann die Anzeige als Zusatzdisplay für das Display des portablen, elektronischen Gerätes vorgesehen sein. Über die Taste oder die Tastenanordnung ist es beispielsweise auch möglich Einstellungen an einer elektronischen Komponente vorzunehmen. So kann an einer Freisprecheinrichtung die Empfindlichkeit des Mikrofons oder die Lautstärke des Lautsprechers eingestellt werden.

Schließlich sieht eine weitere Ausbildung des Erfindungsgegenstands vor, die Integrationseinheit mit einer elektronischen Komponente auszustatten, die als Sende-und/oder Empfangseinheit dient, die über eine kabellose Funkverbindung mit einer Antenne, vorzugsweise einer Außenantenne eines Fahrzeugs in Verbindung steht. Hierdurch ist es möglich auf eine Kabelverbindung zur Antenne zu verzichten und so den Installations- und Deinstallationsaufwand für die Integrationseinheit auf das Einstellen der Integrationseinheit in die Haltevorrichtung zu beschränken.

Erfindungsgemäß ist vorgesehen, dass es sich bei der Antenne um eine aktive Antenne mit eigener Stromversorgung handelt, die wenigstens eine Sende- und/oder Empfangseinheit aufweist. Dadurch, dass die Sende- und/oder Empfangseinheit der Antenne mit der Integrationseinheit vorzugsweise mit einer im Milliwattbereich liegende Sendeleistung in Verbindung tritt und/oder mit einer zu einem Funknetz gehörenden Sende-und/oder Empfangseinheit mit einer im Wattbereich liegenden Sendeleistung kommuniziert, ist es möglich, die im Innenraum eines Fahrzeugs ungewünschten starken Funkwellen auch ohne die Verlegung eines Antennenkabels zu vermeiden bzw. vom Menschen räumlich fernzuhalten. Alternativ ist vorgesehen, dass die Kommunikation zwischen Integrationseinheit und Antenne über Lichtwellen erfolgt.

Eine weitere Ausbildung des Erfindungsgegenstandes sieht vor, die Integrationseinheit mit wenigstens einer Empfangseinheit für den Empfang von im Milliwattbereich liegenden Sendesignalen des portablen, elektronischen Gerätes auszustatten und/oder eine Sendeeinheit zur Abstrahlung von im Wattbereich liegenden Sendesignalen an ein Funknetz vorzusehen, wobei das portable, elektronische Gerät vorzugsweise die Sendesignale des Funknetzes direkt empfängt.

Durch dieses Zusammenwirken des portablen, elektronischen Gerätes mit der Integrationseinheit ist es z.B. möglich, die Integrationseinheit insbesondere im Haus oder im Büro als Tischgerät bzw. Dockingstation einzusetzen. Vorzugsweise wird hierdurch eine Sprecheinrichtung und ggf. eine Ladestation zur Verfügung gestellt. Weiterhin erlaubt diese dem Nutzer, mit dem Funktelefon am Ohr zu telefonieren, ohne dass der Kopf des Nutzers einer vom Funktelefon ausgehenden, im Wattbereich liegenden Sendeleistung direkt ausgesetzt ist.

Erfindungsgemäß ist vorgesehen, dass die Empfangseinheit der Integrationseinheit für den Empfang von im Wattbereich liegenden Sendesignalen des Funknetzes und/oder die Sendeeinheit zum Aussenden von im Milliwattbereich liegenden Sendesignalen zum Handfunkgerät ausgebildet ist. Durch diese Schaltung ist es möglich die Integrationseinheit bei herabgesetzter Strahlenbelastung des Nutzers als Basisstation des Handfunkgeräts zu betrieben, die insbesondere auch Lauthören und Freisprechen ermöglicht.

Weiterhin sieht die Erfindung vor, dass die Integrationseinheit für ein Schwenken des portablen, elektronischen Geräts in wenigstens eine Raumrichtung vorgesehen ist. Hierdurch kann das portable, elektronische Gerät unabhängig von der Lage der Getränke-Haltevorrichtung auf den Nutzer ausgerichtet werden.

Gemäß einer besonderen Ausführungsform des Erfindungsgegenstandes ist es vorgesehen, dass die Integrationseinheit ein Funktelefon und einen Organizer aufnimmt, wobei der Organizer in Blickrichtung des Nutzers vorzugsweise vor dem Funktelefon angeordnet ist. Hierdurch ist es möglich dem Nutzer den freien Blick auf die Displays beider Geräte zu gewähren. Eine Bedienung des Funktelefons kann bei Bedarf über einen auf dem Organizer eingeblendeten Touchscreen (Bildschirm, der auf Berührung reagiert) eingeblendet werden, so dass der Nutzer nicht darauf verzichten muss die beiden Geräte bedienen zu können.

Erfindungsgemäß ist es vorgesehen, die Integrationseinheit mit einer elektronischen Komponente auszustatten, die als im Wattbereich arbeitende Send- und Empfangseinheit mit Antenne ausgebildet ist. Hierdurch kann auf die Installation und den Anschluss einer Antenne verzichtet werden und die Integrationseinheit lässt sich noch schneller von einem Fahrzeug ins andere mitnehmen.

Eine Modifikation des Erfindungsgegenstandes sieht vor, mittels einer in der Integrationseinheit als elektronische Komponente angeordneter Kommunikationseinheit Rechenleistung und/oder Funktionsleistung der Elektronik des Fahrzeuges und/oder der im Fahrzeug eingebauten elektronischen Geräte, wie Bordcomputer in Anspruch zu nehmen. Hierdurch kann die Rechenleistung im Bedarfsfall z.B. bei der Errechnung von Umfahrungsrouten bei Stau für eine als Navigationssystem ausgebildete Funktionseinheit deutlich erhöht werden.

Eine weitere Modifikation des Erfindungsgegenstandes sieht vor, eine Integrationseinheit für mindestens zwei portable elektronische Geräte zur Verfügung zu stellen, die beide für eine elektronische Kommunikation vorgesehen sind, wobei elektronische Komponenten, wie eine Freisprecheinrichtung von beiden portablen, elektronischen Geräten nutzbar sind und wobei eine weitere elektronische Komponente als Koordinator für die Zuordnung der von beiden portablen, elektronischen Geräten genutzten Komponenten dient und gegebenenfalls das Verhalten des jeweils nicht zugeordneten portablen, elektronischen Gerätes regelt. Hierdurch können ohne signifikanten Mehraufwand zum Beispiel mehrere Funktelefone in einem Fahrzeug betrieben werden, ohne dass einer der Nutzer auf den durch die Integrationseinheit zur Verfügung gestellten Komfort verzichten muss oder dass Funktelefone während der Fahrt ausgewechselt werden müssen. Wird zum Beispiel eine Freisprecheinrichtung von einem Navigationssystem und einem Freisprechsystem für ein Funktelefon verwendet, dann kann der Koordinator so programmiert sein, dass er in wichtigen Verkehrssituationen, z. B. Fahrt durch eine Innenstadt dem Navigationssystem im Hinblick auf die Freisprecheinrichtung Vorrang einräumt und das Telefongespräch in eine Warteschleife legt oder einen Rückruf organisiert.

Weitere Einzelheiten der Erfindung werden in der Zeichnung anhand von schematisch dargestellten Ausführungsbeispielen beschrieben.

Hierbei zeigt:
- Fig. 1: eine schematische, abstrakte Darstellung einer Anordnung zum Betrieb von portablen, elektronischen Geräten in Fahrzeugen,
- Fig. 2: eine Seitenansicht eines Funktelefons,
- Fig. 3: eine Draufsicht auf einen Fußbereich des in Fig. 1 dargestellten Funktelefons,
- Fig. 4: eine Draufsicht auf eine Integrationseinheit,
- Fig. 5: eine Frontansicht der in Fig. 3 dargestellten Integrationseinheit mit einem Einsatz und einem in diese eingestellten Funktelefon,
- Fig. 6: eine Seitenansicht der in Figur 4 und Figur 5 dargestellten Integrationseinheit mit einem weiteren in diese eingestellten Funktelefon,
- Fig. 7: eine Seitenansicht der in den Figuren 4 bis 6 dargestellten Integrationseinheit mit einem weiteren in diese eingestellten Funktelefon,
- Fig. 8: eine Draufsicht auf eine weitere Integrationseinheit mit einem Entriegelungsmechanismus,
- Fig. 9: eine vergrößerte Detailansicht des in Figur 8 dargestellten Entriegelungsmechanismuses,
- Fig. 10: eine Seitenansicht einer an einem Cockpit befestigten Getränke-Haltevorrichtung,
- Fig. 11: eine Draufsicht auf die in Figur 10 dargestellte Haltevorrichtung,
- Fig. 12: eine Seitenansicht einer Integrationseinheit, in die ein Organizer eingestellt ist,
- Fig. 13: eine Seitenansicht einer weiteren Integrationseinheit, in die ein weiterer Organizer eingestellt ist,
- Fig. 14: eine teilweise geschnittene Seitenansicht der in Figur 13 dargestellten Integrationseinheit mit Organizer,
- Fig. 15: eine schematische Darstellung einer Funkverbindung zwischen einer Integrationseinheit, einer Antenne und einem Funknetz,
- Fig. 16: eine schematische Darstellung einer Funkverbindung zwischen einem Funktelefon, einer Integrationseinheit und einem Funknetz,
- Fig. 17: eine Seitenansicht auf eine weitere Integrationseinheit, in die ein Funktelefon und ein Organizer eingestellt sind,
- Fig. 18: eine schematische Darstellung einer Anordnung mit Integrationseinheit, Funktelefon und Organizer.

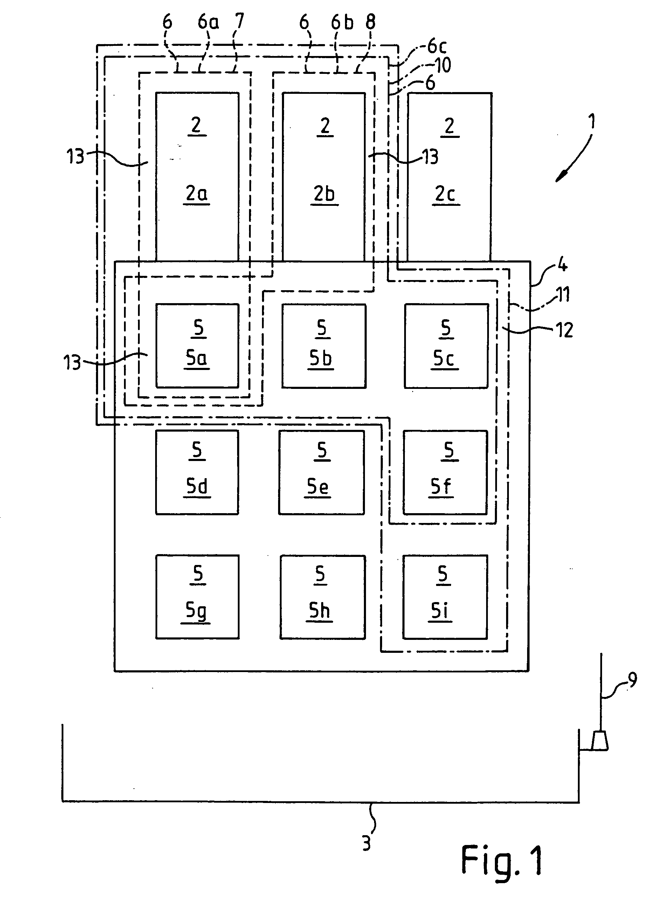

Figur 1 zeigt eine schematische, abstrakte Darstellung einer Anordnung 1 zum Betrieb von portablen, elektronischen Geräten 2 in einem Fahrzeug 3. Die Anordnung 1 umfasst neben den portablen elektronischen Geräten 2, eine Integrationseinheit 4 und mehrere elektronische Komponenten 5. Die portablen, elektronischen Geräte 2 sind als Funktelefon 2a, als Organizer 2b und als GPS-Empfänger 2c zum Empfang von Koordinaten von einem Satelliten ausgebildet. Die elektronischen Komponenten 5 sind als Freisprecheinrichtung 5a, Stromversorgung 5b, Antennenverstärker 5c, im Milliwattbereich arbeitende Sende- und/oder Empfangseinheit 5d, im Wattbereich arbeitende Send- und/oder Empfangseinheit 5e, GPS-Modul 5f, Beschleunigungssensor 5g, Bewegungssensor 5h und Koordinator 5i ausgebildet.

Durch die elektronische Zusammenschaltung der Integrationseinheit 4 über einen nicht dargestellten Controller mit mindestens einem portablen, elektronischen Gerät 2 und mindestens einer elektronischen Komponente 5 entsteht eine Funktionseinheit 6. Ein Funktionseinheit 6a wird beispielsweise durch die Integrationseinheit 4, das Funktelefon 2a und die Freisprecheinrichtung 5a gebildet. Die Funktionseinheit 6 bietet beispielsweise die Möglichkeit sich per Funktelefon 2a über einen in der Freisprecheinrichtung 5a enthaltenen Lautsprecher und ein in der Freisprecheinrichtung 5a enthaltenes Mikrofon frei mit einem Gesprächspartner zu unterhalten, wobei die Bestandteile der Freisprecheinrichtung 5a in der Integrationseinheit 4 angeordnet sind. Die Funktionseinheit 6a bildet somit eine Freisprechsystem 7.

Eine zweite Funktionseinheit 6b wird beispielsweise durch die Integrationseinheit 4, den Organizer 2b und die Freisprecheinrichtung 5a gebildet. Die Funktionseinheit 6b ermöglicht es zum Beispiel, dass dem Nutzer auf dem Organizer 2b gespeicherte Nachrichten und Texte über die Freisprecheinrichtung 5a vorgelesen werden, sofern der Organizer 2b über eine Sprachsteuerung verfügt können vom Nutzer gezielt Informationen aus dem Organizer 2b abgerufen werden. Die Funktionseinheit 6b bildet somit ein Organizer-Sprachsteuer-System 8.

Eine dritte Funktionseinheit 6c wird beispielsweise durch die Integrationseinheit 4, das Funktelefon 2a, den Organizer 2b, die Freisprecheinrichtung 5a, die Stromversorgung 5b, den Antennenverstärker 5c und das GPS-Modul 5f gebildet, wobei der Antennenverstärker 5c mit einer Außenantenne 9 des Fahrzeuges 3 in Verbindung steht. Durch die Funktionseinheit 6c ist es möglich ein Navigationssystem 10 aufzubauen, bei dem durch das GPS-Modul 5f ermittelte Koordinaten an den Organizer 2b weitergeleitet werden und über das Funktelefon 2a elektronische Verkehrsinformationen abgerufen werden. Weiterhin dient die Freisprecheinrichtung 5a zur Sprachsteuer des Navigationssystems 10 bzw. zur akustischen Ausgabe der Weginformationen. Über die Stromversorgung 5b ist der dauerhafte Betrieb der portablen, elektronischen Geräte 2 und der elektronischen Komponenten 5 möglich. Der Antennenverstärker 5c sorgt für einen optimalen Empfang während der Fahrt. Weiterhin ist es möglich über das Funktelefon 2a Verbindung zu einem räumlich entfernten Rechner aufzunehmen, von dem Kartendaten geladen werden und/oder Routenberechnungen vorgenommen werden.

Mittels des Koordinators 5i kann per Tastendruck (Taste z.B. an der Integrationseinheit 4 oder am Organizer 2b) oder abhängig von Ereignissen zwischen den verschiedenen Funktionseinheiten 6 bzw. 7, 8, 10 gewechselt werden, so dass die jeweils benötigten portablen, elektronischen Geräte 2 bzw. elektronischen Komponenten 5 für die jeweils benötigte Funktionseinheit 6 zur Verfügung gestellt werden. Mehrere Funktionseinheit 6 bilden dann als Funktionseinheit 11 eine Vereinigungsmenge 12, die auch den Koordinator 5i enthält. Aufgabe des Koordinators 5i ist es die Zuordnung von portablen, elektronischen Geräte 2 bzw. elektronischen Komponenten 5 zu Funktionseinheiten 6 zu regeln, die sich in einer Schnittmenge 13 von Funktionseinheiten 6 befinden. Im dargestellten Beispiel befinden sich das Funktelefon 2a, der Organizer 2b und die Freisprecheinrichtung 5a in den Schnittmengen 13 der Funktionseinheiten 6, das heißt, diese werden von mehreren Funktionseinheiten 6 bzw. 6a, 6b, 6c genutzt bzw. Benötigt. Die Freisprecheinrichtung 5a befindet sich in der Schnittmenge der Funktionseinheiten 6a, 6b, 6c.

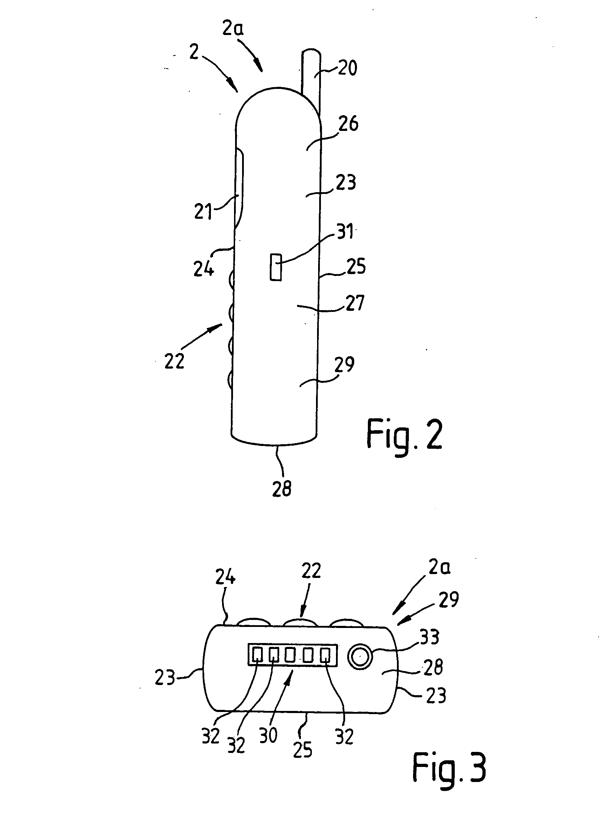

Figur 2 zeigt ein als Funktelefon 2a ausgebildetes portables, elektronisches Geräte 2 in Seitenansicht. Das Funktelefon 2a besitzt eine Antenne 20, eine Display 21 und eine Tastatur 22. Weiterhin weist es Seitenbereiche 23, einen Frontbereich 24 und einen Rückenbereich 25 auf. Die Antenne 20 und das Display 21 sind in einem Kopfabschnitt 26 angeordnet. Die Tastatur 22 liegt in einem Mittelabschnitt 27 des Funktelefons 2a und an einem Boden 28 eines Fußabschnitt 29 ist eine Schnittstelle 30 (siehe Figur 3) angeordnet. In die Seitenbereiche 23 ist jeweils eine Vertiefung 31 eingeformt.

Figur 3 zeigt eine Draufsicht auf den Fußabschnitt 29 des in Figur 2 dargestellten Funktelefons 2a. An dem Boden 28 ist die Schnittstelle 30 angeordnet, diese weist Kontakte 32 und einen Antennenbuchse 33 auf.

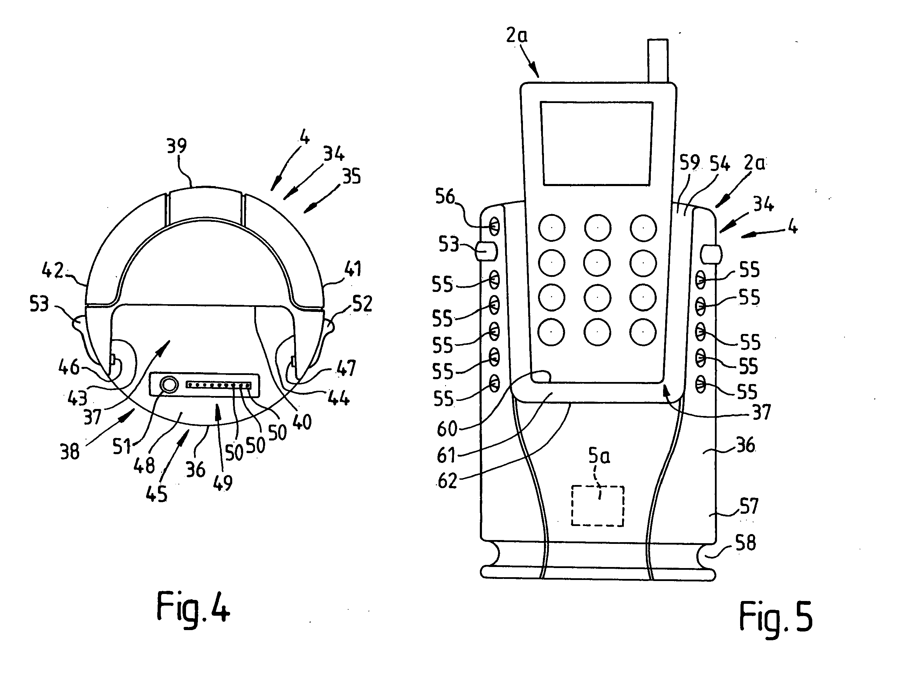

Figur 4 zeigt eine Draufsicht auf eine Integrationseinheit 4, die als im Wesentlichen zylindrischer Körper 34 ausgebildet ist. In der Draufsicht weist die Integrationseinheit 4 somit einen im wesentlichen kreisförmigen Querschnitt 35 auf. Weiterhin besitzt die Integrationseinheit 4 eine zu einer Vorderseite 36 hin offene taschen- oder köcherartige Aufnahme 37 auf, die als Einstecköffnung 38 ausgestaltet ist. Diese Aufnahme 37 ist zur einer Rückseite 39 der Integrationseinheit 4 hin durch eine Rückwand 40 abgegrenzt. Zu Seitenflächen 41, 42 der Integrationseinheit 4 hin ist die Aufnahme 37 durch Seitenwände 43, 44 begrenzt. Zur Vorderseite 36 der Integrationseinheit 4 hin weist die Aufnahme 37 einen Ausschnitt 45 auf. An den Seitenwänden 43, 44 sind Rastnasen 46, 47 angeordnet, die dafür vorgesehen sind, in die Vertiefungen 31 des Funktelefons 2a einzugreifen (siehe Figur 2), um das Funktelefon 2a in der Aufnahme 37 zu fixieren. Nach unten hin wird die Aufnahme 37 durch einen Boden 48 begrenzt. Im Boden 48 ist eine Schnittstelle 49 mit Kontaktstiften 50 und einem Antennenkontakt 51 angeordnet. Durch das Einstellen des Funktelefons 2a in die Aufnahme 37 kommt die Schnittstelle 49 mit einer entsprechenden Schnittstelle 30 (siehe Figur 2) des Funktelefons 2a in Kontakt. Gleichzeitig greifen die Rastnasen 46, 47 in die Vertiefungen 31 des Funktelfons 2a ein und halten dieses formschlüssig. Ein Lösen des Funktelefons 2a aus der Aufnahme 37 erfolgt durch eine Zurückziehen der Rastnasen 46, 47 mit Hilfe von an den Seitenflächen 41, 42 der Integrationseinheit 4 angeordneten Entriegelungstasten 52, 53.

Figur 5 zeigt eine Frontansicht der in Figur 4 dargestellten Integrationseinheit 4, wobei diese mit einem Einsatz 54 ausgestattet ist, in den ein weiteres Funktelefon 2a eingestellt ist. In der Frontansicht der Integrationseinheit 4 sind auf der Vorderseite 36 der Integrationseinheit 4 Auslassöffnungen 55 für einen nicht dargestellten Lautsprecher zu sehen, der zu einer in der Integrationseinheit 4 angeordneten Freisprecheinrichtung 5a gehört. Oberhalb der Entriegelungstaste 53 ist eine Einlassöffnung 56 für ein nicht dargestelltes Mikrofon angeordnet, das ebenfalls zu der Freisprecheinrichtung 5a gehört. Der zylindrische Körper 34 besitzt in einem unteren Bereich 57 eine Einschnürung 58, die zum Aufwickeln eines nicht dargestellten Stromversorgungs- oder Antennenkabels vorgesehen ist. Der in der Aufnahme 37 angeordnete Einsatz 54 dient dazu, die Aufnahme 37 auf das Funktelefon 2a anzupassen, so dass die Integrationseinheit 4 mit Hilfe eines als Einsatz 54 ausgebildeten Adapters 59 auf ein beliebiges Funktelefon anpassbar ist. Durch den Einsatz 54 erfolgt ein Anpassung der Aufnahme 37 auf die Form eines Funktelefons und/oder eine Anpassung der Schnittstelle des Funktelefons auf die Schnittstelle 49 (siehe Figur 4) der Integrationseinheit 4. Der Einsatz 54 wird über die Rastnasen 46, 47 (siehe Figur 4) formschlüssig in der Integrationseinheit 4 gehalten. Das Funktelefon 2a sitzt wiederum haftschlüssig und/oder formschlüssig in dem Einsatz 54. Gemäß einer bevorzugten Ausführungsform weist eine Oberseite 60 eines Bodens 61 des Einsatzes 54 eine zu dem Funktelefon 2a passende Schnittstelle (nicht dargestellt) auf. Eine Unterseite 62 des Bodens 61 weist eine zur Schnittstelle 49 (siehe Figur 4) der Integrationseinheit 4 passenden Schnittstelle (nicht dargestellt) auf. Die beiden nicht dargestellten Schnittstellen sind untereinander verkabelt.

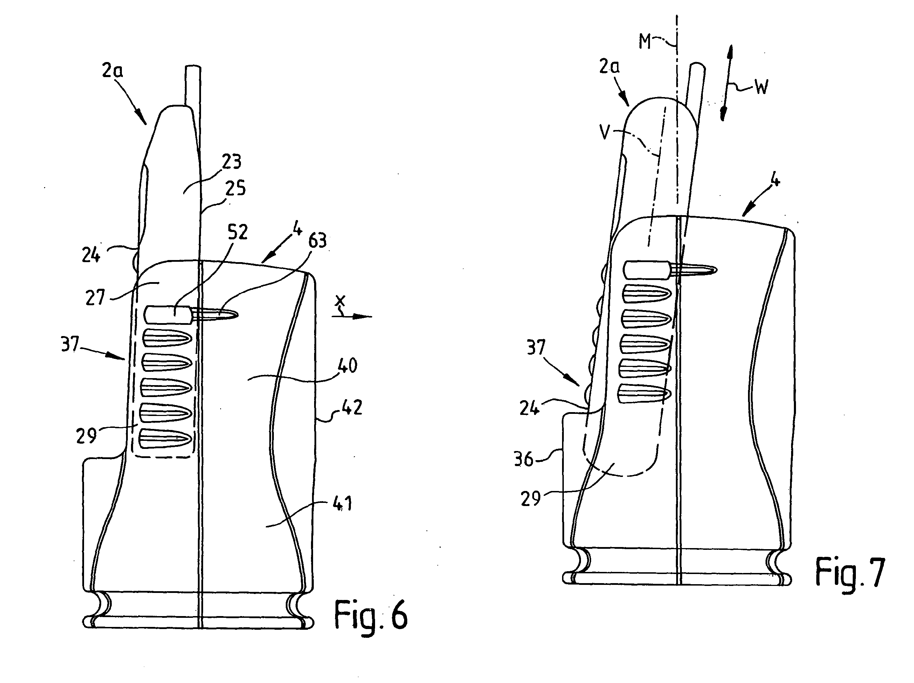

Figur 6 zeigt eine Seitenansicht der in Figur 4 und Figur 5 dargestellten Integrationseinheit 4 mit einem weiteren in diese eingestellten Funktelefon 2a. Das Funktelefon 2a befindet sich mit einem Mittelabschnitt 27 und einem Fußabschnitt 29 in der Aufnahme 37 der Integrationseinheit 4. Gegen Kräfte, die auf Seitenbereiche 23 und einen Frontbereich 24 des Funktelefons 2a wirken stützt sich dieses gegen die Rückwand 40 und die Seitenwände 43, 44 (siehe Figur 4) der Integrationseinheit 4 ab. Kräfte, die auf den Rückenbereich 25 des Funktelefons 2a wirken, werden von den Rastnasen 46, 47 (siehe Figur 4) aufgefangen. Auf der Seitenfläche 41 der Integrationseinheit 4 ist ein Schlitz 63 zu sehen, der sich von der Entriegelungstaste 52 in Pfeilrichtung x erstreckt. Durch ein Verschieben der Entriegelungstaste 52 in Pfeilrichtung x entlang des Schlitzes 63 wird ein Zurückziehen der Rastnase 47 (siehe Figur 4) bewirkt. Die Seitenfläche 42 ist entsprechend der Seitenfläche 41 ausgestaltet.

Figur 7 zeigt eine Seitenansicht der in den Figuren 4 bis 6 dargestellten Integrationseinheit 4 mit einem in diese eingestellten Funktelefon 2a. Die Integrationseinheit 4 weist eine Aufnahme 37 auf, die zu einer Vorderseite 36 der Integrationseinheit 4 nur teilweise geöffnet ist, so dass ein Fußabschnitt 29 des Funktelefons 2a auch zu einem Frontbereich 24 des Funktelefons 2a hin von der Integrationseinheit 4 umgriffen wird. Gemäß nicht dargestellter Ausführungsvarianten ist es bei Funktelefonen, deren Schnittstelle gemeinsam mit der Schnittstelle der Dockingstation eine Stabilität gebende, mechanisch belastbare Einheit bildet, vorgesehen, auf den Einsatz von Rastnasen zur Halterung des Funktelefons zu verzichten. Weiterhin ist es vorgesehen durch Einlagen, insbesondere Moosgummi- und/oder PU-Einlagen im Aufnahmeraum eine Haftklemmung des Funktelefons zu bewirken. Das Einstellen und die Entnahme des Funktelefons 2a aus der Integrationseinheit 4 erfolgt mit einer geradlinigen Bewegung in eine der durch einen Doppelpfeil w angegebenen Richtungen. Der Doppelpfeil w ist weitgehend parallel zu einer Längsachse u der Integrationseinheit 4 und einer Längsachse v des Funktelefons 2a ausgerichtet.

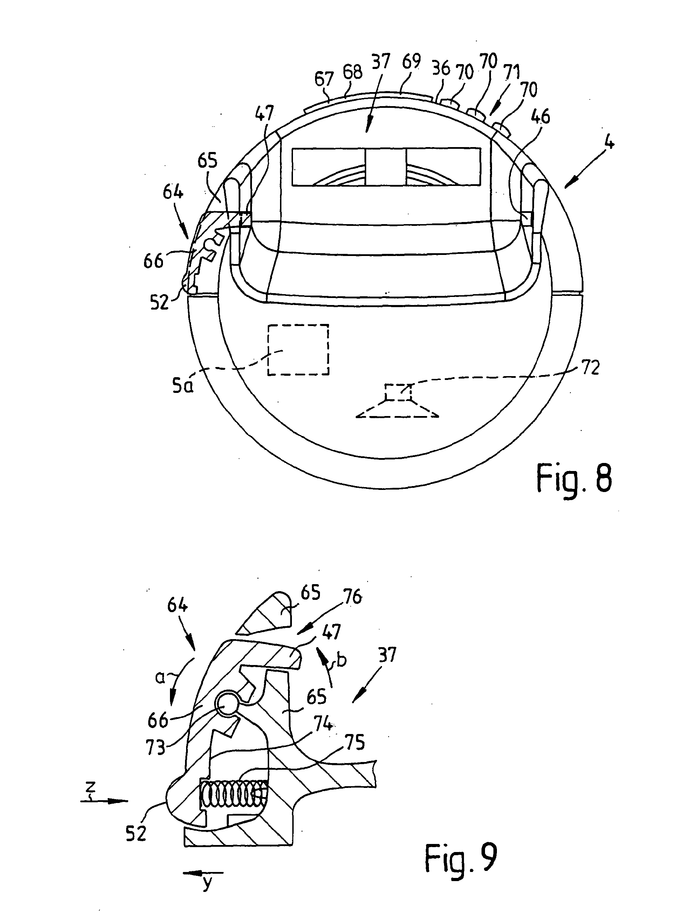

Figur 8 zeigt eine Draufsicht auf eine weitere Integrationseinheit 4 mit einem Entriegelungsmechanismus 64.

Der Entriegelungsmechanismus 64 greift mit einer Rastnase 47 in eine Aufnahme 37 ein. Ein zu einer Rastnase 46 gehörender, zweiter Entriegelungsmechanismus ist spiegelbildlich zum Entriegelungsmechanismus 64 ausgeführt und zum Erhalt der Übersichtlichkeit der Figur 8 nicht näher dargestellt. Die Rastnase 47 ist Bestandteil eines in einer Seitenwand 65 der Integrationseinheit 4 gelagerten Hebels 66, der zur Bedienung des Entriegelungsmechanismuses 64 eine Entriegelungstaste 52 aufweist. Auf einer Vorderseite 36 der Integrationseinheit 4 ist eine Anzeigevorrichtung 67 vorgesehen, die als Display 68 oder LED-Anzeige 69 ausgeführt ist. Neben der Anzeigevorrichtung 67 sind Tasten 70 bzw. eine Tastenanordnung 71 angeordnet. Mit Hilfe der Tasten 70 bzw. der Tastenanordnung 71 ist es möglich einen in der Integrationseinheit 4 angeordneten Lautsprecher 72, der zu einer Freisprecheinrichtung 5a gehört, ein- oder auszuschalten.

In Figur 9 ist der Entriegelungsmechanismus 64 aus Figur 8 in einer vergrößerten Einzelansicht dargestellt. Der Hebel 66 ist um eine an der Seitenwand 65 ausgebildete Achse 73 drehbar gelagert und wird in einem der Entriegelungstaste 52 gegenüberliegenden Bereich 74 durch eine Feder 75 in Pfeilrichtung y von der Seitenwand 65 weggedrückt. In dieser Grundstellung taucht die Rastnase 47 in die Aufnahme 37 bzw. bei eingestelltem Funktelefon in eine Vertiefung des Funktelefons ein. Durch einen Fingerdruck in Pfeilrichtung z auf die Entriegelungstaste 52 wird die Feder 75 zusammengedrückt und der Hebel 66 dreht sich in Pfeilrichtung a um die Achse 73, so dass die Rastnase 47 in Pfeilrichtung b aus der Aufnahme 37 bzw. aus der Vertiefung des Funktelefones (hier nicht dargestellt) geführt wird. Durch Loslassen der Entriegelungstaste 52 schnappt der Hebel 66 wieder in die dargestellte Grundstellung zurück. Durch den Entriegelungsmechanismus 64 ist eine Rasteinrichtung 76 für ein Funktelefon verwirklicht.

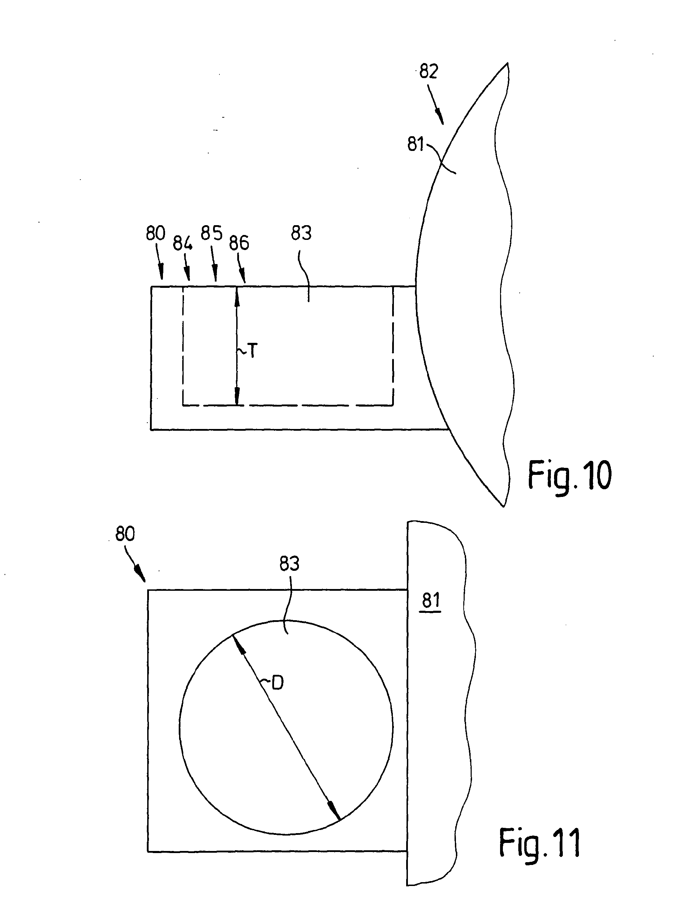

Figur 10 zeigt eine Seitenansicht einer Getränke-Haltevorrichtung 80, die an einem Cockpit 81 eines Fahrzeuges 82 befestigt ist. Die Haltevorrichtung 80 weist einen zylinderförmigen Aufnahmeraum 83 auf, der eine Tiefe T besitzt. Die Haltevorrichtung 80 ist als Trinkbecherhalter 84, Dosenhalter 85 bzw. Flaschenhalter 86 ausgebildet.

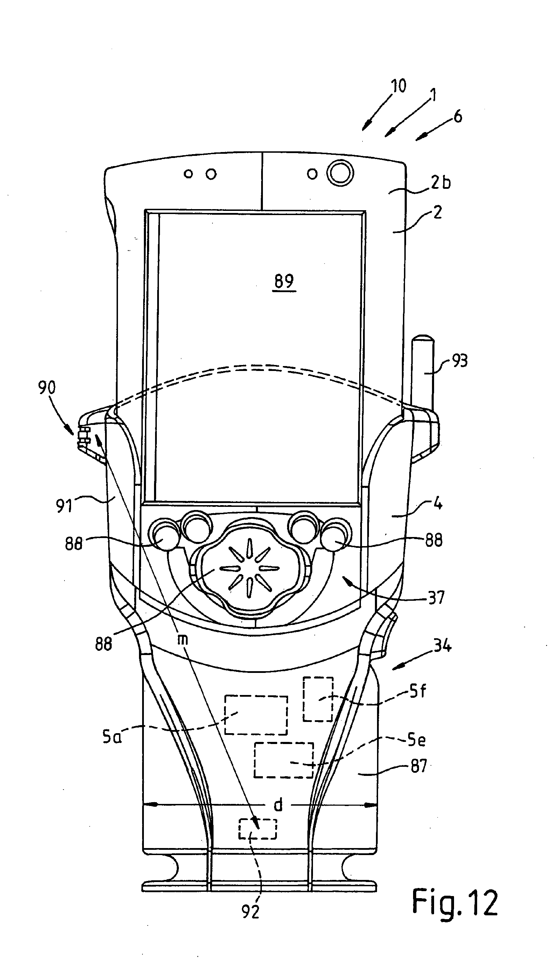

In Figur 11 ist die in Figur 10 dargestellte Getränke-Haltevorrichtung 80 in Draufsicht dargestellt. Der zylinderförmige Aufnahmeraum 83 besitzt einen Durchmesser D, der im Bereich von etwa 55 mm bis 75 mm liegt.

Durch Einstellen des Funktelefons 2a in die Aufnahme 37 der Integrationseinheit 4, welche die Freisprecheinrichtung 5a enthält, und Einstellen der Integrationseinheit 4 in den Aufnahmeraum 83 der Getränke-Haltevorrichtung 80 wird eine erfindungsgemäße Anordnung 1 gebildet. Somit kann die erfindungsgemäße Anordnung 1 in dieser Form überall dort verwirklicht werden, wo eine Getränke-Haltevorrichtung 80 zur Verfügung steht. Das heißt, es kann auf den Transport und die jeweilige Befestigung eines wesentlichen Bauteils oder auf einen separaten Einbau einer Haltevorrichtung für ein Funktelefon verzichtet werden. Auf diese Weise wird ein Höchstmaß an Transportabilität bei gleichzeitig geringem Transportaufwand erreicht.

Figur 12 zeigt eine Integrationseinheit 4, in die ein als Organizer 2b ausgebildetes portables, elektronisches Gerät 2 eingestellt ist. Die Integrationseinheit 4 weist einen im Wesentlichen zylindrischen Körper 34 auf, der in einem Fußbereich 87 einen Durchmesser d aufweist, der auf eine nicht dargestellte Getränke-Haltevorrichtung abgestimmt ist. Der Organizer 2b ist von einer Aufnahme 37 der Integrationseinheit 4 derart aufgenommen, dass dieser von der Integrationseinheit 4 bereichsweise umfasst ist, wobei der Zugriff auf Bedienelemente 88 der Integrationseinheit 4 möglich ist und auch eine freie Sicht auf ein Display 89 des Organizers 2b gewährleistet ist. Ein Mikrofon 90 einer in der Integrationseinheit 4 angeordneten Freisprecheinrichtung 5a ist in einem Kopfbereich 91 der Integrationseinheit 4 positioniert. Ein zu der Freisprecheinrichtung 5a gehörender Lautsprecher 92 ist im Fußbereich 87 der Integrationseinheit 4 aufgenommen, so dass Mikrofon 90 und Lautsprecher 92 einen maximalen Abstand m voneinander aufweisen und akustische Rückkopplungen vermieden werden. Im Kopfbereich 91 ist weiterhin eine Antenne 93 an der Integrationseinheit 4 ausgebildet, die mit einer in der Integrationseinheit 4 angeordneten im Wattbereich arbeitenden Sende- und Empfangseinheit 5e zusammenarbeitet. Durch die in Figur 2 gezeigte Anordnung 1 ist beispielsweise mittels eines in der Integrationseinheit 4 angeordneten Satelliten-Koordinaten-Empfängers 5f eine Funktionseinheit 6 verwirklicht, die als portables Navigationssystem 10 mit Sprachsteuerung und Sprachführung einsetzbar ist.

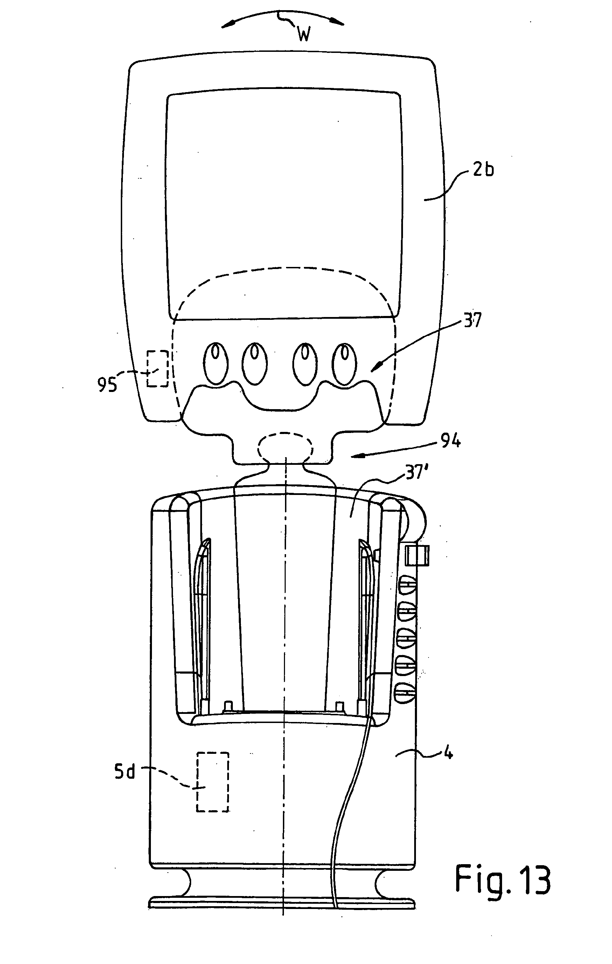

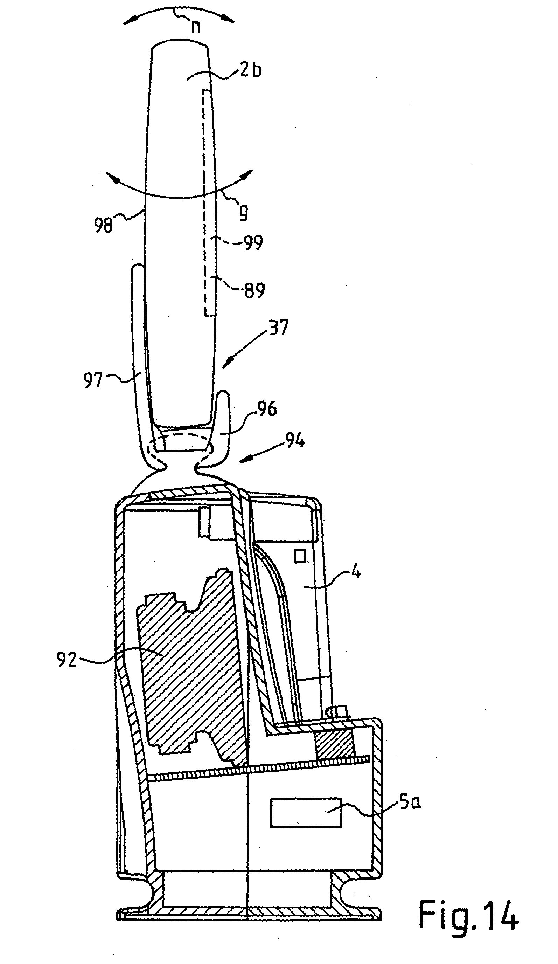

Figur 13 zeigt eine Integrationseinheit 4, in die ein Organizer 2b eingestellt ist und die neben der Aufnahme 37 für den Organizer 2b noch eine weitere Aufnahme 37' für einen mobilen Satelliten-Koordinaten-Empfänger oder ein Funktelefon aufweist. Der Organizer 2b ist mit der Integrationseinheit 4 mechanisch über ein Kugelgelenk 94 verbunden, das eine Gierbewegung (Pfeil g) und/oder Wankbewegung (Pfeil w) und/oder Nickbewegung (Pfeil n) (siehe auch Figur 14) des Organizers 2b in Bezug auf die Integrationseinheit 4 erlaubt und somit optimal ins Sichtfeld eines Nutzers stellbar ist. Die Datenverbindung zwischen dem Organizer 2b und der Integrationseinheit 4 erfolgt über im Milliwattbereich arbeitende Sende- und Empfangseinheiten 95, 5d.

Figur 14 zeigt eine teilweise geschnittene Seitenansicht der Darstellung aus Figur 13. In der Integrationseinheit 4 ist ein Lautsprecher 92 zu sehen, der zu eine Freisprecheinrichtung 5a gehört, die in der Integrationseinheit 4 angeordnet ist. Weiterhin ist zu sehen, dass das die Aufnahme 37' bildende bewegliche Element 96 des Kugelgelenks 94 als Köcher 97 ausgestaltet ist, der den Organizer 2b aufnimmt und insbesondere in einem Rückenbereich 98 unterstützt, so dass auch eine Bedienung des als Touchscreen 99 ausgebildeten Displays 89 möglich ist, ohne dass die mechanische Belastung für den Organizer 2b zu groß wird.

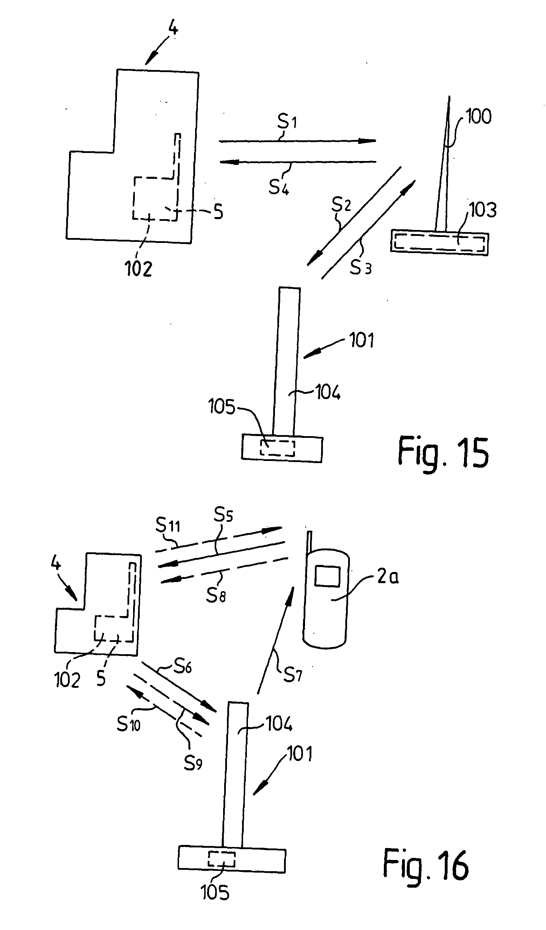

Figur 15 zeigt eine schematische Darstellung einer Funkverbindung zwischen einer Integrationseinheit 4, einer Antenne 100 und einem Funknetz 101. Die Integrationseinheit 4 erzeugt in einer als Sende- und Empfangseinheit 102 ausgebildeten elektronischen Komponente 5 Sendewellen S₁, die von einer der Antenne 100 zugeordneten Sende- und Empfangseinheit 103 verarbeitet werden und als verstärkte Sendewellen S₂ zum Funknetz 101 abgestrahlt werden. Das Funknetz 101 empfängt die Sendewellen S₂ über eine Antenne 104 und eine Sende- und Empfangseinheit 105. Vom Funknetz 101 ausgehende Sendewellen S₃ werden von der der Antenne 100 zugeordneten Sende- und Empfangseinheit 103 empfangen und mit einer verminderten Sendeleistung als Sendewellen S₄ an die Sende- und Empfangseinheit 102 der Integrationseinheit 4 geschickt.

Figur 16 zeigt eine schematische Darstellung einer Funkverbindung zwischen einem Funktelefon 2a, einer Integrationseinheit 4 und einem Funknetz 101. Das Funktelefon 2a erzeugt schwache Sendewellen S₅, die von einer als Sende-und Empfangseinheit 102 ausgebildeten elektronischen Komponente 5 der Integrationseinheit 4 empfangen werden und als verstärkte Sendewellen S₆ an eine zum Funknetz 101 gehörende Antenne 104 mit zugeordneter Sende- und Empfangseinheit 105 abgestrahlt werden. Die vom Funknetz ausgehenden Sendewellen S₇ werden direkt vom Funktelefon 2a empfangen. Alternativ ist vorgesehen, dass das Funktelefon 2a schwache Sendewellen S₈ an die Integrationseinheit 4 sendet und die Integrationseinheit 4 diese als starke Sendewellen S₉ weiterleitet. Vom Funknetz 101 ausgehende stake Sendewellen S₁₀ werden von der Integrationseinheit 4 empfangen und als schwache Sendewellen S₁₁ an das Funktelefon 2a weitergeleitet.

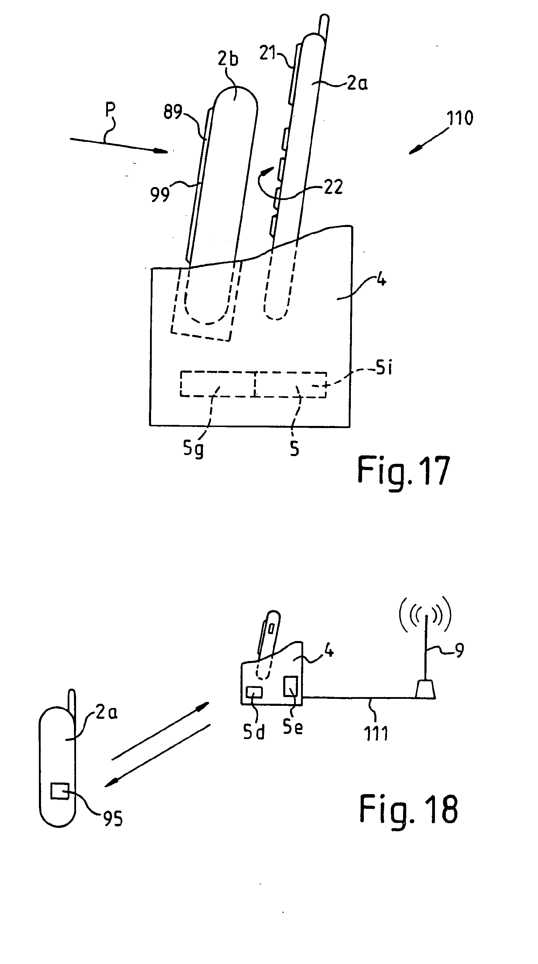

Figur 17 zeigt eine Seitenansicht einer weiteren Integrationseinheit 4, in die ein Funktelefon 2a und ein Organizer 2b eingestellt ist. Aus einer durch einen Pfeil P angedeuteten Blickrichtung eines Nutzers ist sowohl ein Display 21 des Funktelefons 2a als auch ein Display 89 des Organizers 2b ablesbar. Über eine in der Integrationseinheit 4 eingebaute als Koordinator 5i ausgebildete elektronische Komponente 5 ist es möglich, eine Tastatur 22 des Funktelefons 2a auf dem Display 89 des Organizers 2b, das als Touchscrenn 99 ausgebildet ist, abzubilden und somit die Tastatur 22 des Funktelefons 2a für den Nutzer zugänglich zu machen, obwohl diese vom Organizer 2b verdeckt ist. Zusammen mit einem in der Integrationseinheit 4 angeordneten Beschleunigungssensor 5g kann ein Notfallmeldesystem 110 ausgebildet werden. Wird ein bestimmter Beschleunigungswert überschritten, dann erfolgt über das Funktelefon 2a eine Notfallmeldung an eine Leitstelle, wobei beispielsweise der Beschleunigungswert übermittelt wird, aus dem sich Rückschlüsse auf die Schwere des Unfalls ziehen lassen. Weiterhin ist gegebenenfalls auch eine Übermittlung von weiteren persönlichen Daten, wie Blutgruppe und Name des Nutzers aus dem Organizer 2b vorgesehen.

Wie Figur 18 zeigt kann für die Verbindung zwischen dem Funktelefon 2a und der Integrationseinheit 4 auch eine Verbindung über im Milliwattbereich liegende Wellen durch Sende- und/oder Empfangseinheiten 5d, 95 vorgesehen sein.

Hierdurch ist es möglich das Funktelefon 2a für ein persönliches Telefonat, bei dem Mitreisende nicht mithören sollen, aus der Integrationseinheit 4 zu entnehmen. Weiterhin erlaubt eine derartige Verbindung das Funktelefon 2a bei kurzen Fahrten in der Tasche zu lassen und somit nicht Gefahr zu laufen, das Funktelefon im Fahrzeug zu vergessen. Eine im Wattbereich arbeitende Sende- und/oder Empfangseinheit 5e ist über ein Kabel 111 mit einer Außenantenne 9 verbunden, so dass im Fahrzeug nur Funkwellen vorhanden sind, die von Sendern mit Leistungen im Milliwattbereich erzeugt werden.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch die Bildung von Funktionseinheiten in Abhängigkeit von Parametern, die z. B. von elektronischen Komponenten erfasst werden, vor. So ist es vorgesehen, dass bei abgeschlossenem Fahrzeug (1. Parameter) und nicht belegten Sitzplätzen (2. Parameter) das im Fahrzeug zurückgelassene Funktelefon ausgeschaltet wird, um bei Diebstahl durch PIN-Nummer geschützt zu sein. Durch das Zusammenwirken der elektronischen Komponente mit der Integrationseinheit und dem Funktelefon wird so eine als Funktelefonschutz ausgebildete Funktionseinheit gebildet, deren Aktivierung von bestimmten Parametern abhängig ist.

Weiterhin ist es für den Betrieb von zwei Funktelefonen über eine Integrationseinheit vorgesehen, dass immer dann wenn das erste Funktelefon in Gebrauch ist ein auf dem zweiten Funktelefon eingehender Anruf ein Besetztzeichen erhält.

### Bezugszeichenliste:

- 1: Anordnung
- 2: portables, elektronisches Gerät
- 2a: Funktelefon
- 2b: Organizer
- 2c: Satelliten-Koordinaten-Empfänger
- 3: Fahrzeug
- 4: Integrationseinheit
- 5: elektronische Komponente
- 5a: Freisprecheinrichtung
- 5b: Stromversorgung
- 5c: Antennenverstärker
- 5d: Sende- und/oder Empfangseinheit
- 5e: Sende- und/oder Empfangseinheit
- 5f: GPS-Modul
- 5g: Beschleunigungssensor
- 5h: Bewegungssensor
- 5i: Koordinator
- 6: Funktionseinheit
- 6a: erste Funktionseinheit
- 6b: zweite Funktionseinheit
- 6c: dritte Funktionseinheit
- 7: Freisprechsystem
- 8: Organizer-Sprachsteuer-System
- 9: Außenantenne
- 10: Navigationssystem
- 11: Funktionseinheit
- 12: Vereinigungsmenge
- 13: Schnittmenge
- 20: Antenne
- 21: Display
- 22: Tastatur
- 23: Seitenbereich
- 24: Frontbereich
- 25: Rückenbereich
- 26: Kopfabschnitt
- 27: Mittelabschnitt
- 28: Boden
- 29: Fußabschnitt
- 30: Schnittstelle
- 31: Vertiefung
- 32: Kontakt
- 33: Antennenbuchse
- 34: zylindrischer Körper
- 35: Querschnitt
- 36: Vorderseite
- 37: Aufnahme
- 37': Aufnahme
- 38: Einstecköffnung
- 39: Rückseite
- 40: Rückwand
- 41: Seitenfläche
- 42: Seitenfläche
- 43: Seitenwand
- 44: Seitenwand
- 45: Ausschnitt
- 46: Rastnase
- 47: Rastnase
- 48: Boden
- 49: Schnittstelle
- 50: Kontaktstift
- 51: Antennenkontakt
- 52: Entriegelungstaste
- 53: Entriegelungstaste
- 54: Einsatz
- 55: Auslassöffnung
- 56: Einlassöffnung
- 57: Bereich
- 58: Einschnürung
- 59: Adapter
- 60: Oberseite
- 61: Boden
- 62: Unterseite
- 63: Schlitz
- 64: Entriegelungsmechanismus
- 65: Seitenwand
- 66: Hebel
- 67: Anzeigevorrichtung
- 68: Display
- 69: LED-Anzeige
- 70: Taste
- 71: Tastenanordnung
- 72: Lautsprecher
- 73: Achse
- 74: Bereich
- 75: Feder
- 76: Rasteinrichtung
- 80: Getränke-Haltevorrichtung
- 81: Cockpit
- 82: Fahrzeug
- 83: Aufnahmeraum
- 84: Trinkbecherhalter
- 85: Dosenhalter
- 86: Flaschenhalter
- 87: Fußbereich
- 88: Bedienelement
- 89: Display
- 90: Mikrofon
- 91: Kopfbereich
- 92: Lautsprecher
- 93: Antenne
- 94: Kugelgelenk
- 95: Sende- und Empfangseinheit
- 96: Element
- 97: Köcher
- 98: Rückenbereich
- 99: Touchscreen
- 100: Antenne
- 101: Funknetz
- 102: Sende- und Empfangseinheit
- 103: Sende- und Empfangseinheit
- 104: Antenne
- 105: Sende- und Empfangseinheit
- 110: Notfallmeldesystem
- 111: Kabel

## Patentansprüche

1. Anordnung (1) mit einer Integrationseinheit (4), **dadurch gekennzeichnet, dass** die Integrationseinheit (4) mit einem ersten portablen, elektronischen Gerät (2) eine erste Funktionseinheit (6) und mit mindestens einem weiteren portablen, elektronischen Gerät (2) mindestens eine weitere Funktionseinheit (6) bildet, wobei das Verhalten der Funktionseinheiten (6) untereinander durch eine als Koordinator (5i) ausgebildete elektronische Komponente (5) geregelt ist.

2. Anordnung (1) nach Anspruch 1, **dadurch gekennzeichnet, dass** mindestens zwei Funktelefone (2a) zusammen mit der Integrationseinheit (4) und mindestens einer elektronischen Komponenten (5) Funktionseinheiten (6) bilden, wobei die mindestens eine elektronische Komponente (5) wahlweise von einem ersten oder einem weiteren Funktelefon (2a) nutzbar ist.

3. Anordnung (1) nach einem der vorhergehenden Ansprüche, **dadurch gekennzeichnet, dass** mindestens zwei Funktionseinheiten (6; 6a, 6b, 6c) eine weitere übergeordnete Funktionseinheit (11) bilden.

4. Anordnung (1) nach einem der vorhergehenden Ansprüche, **dadurch gekennzeichnet, dass** das portable, elektronische Gerät (2) und die Integrationseinheit (4) über eine vorzugsweise im Milliwattbereich arbeitende Funkverbindung (5d, 95), wie blue-tooth Verbindung und/oder Infrarotverbindung oder dergleichen miteinander in Verbindung stehen.

5. Anordnung (1) nach einem der vorhergehenden Ansprüche, **dadurch gekennzeichnet, dass** die einzelnen Funktionseinheiten (6; 6a, 6b, 6c) in Abhängigkeit von vorgegebenen und/oder erfassten und/oder übermittelten Parametern gebildet werden.

6. Anordnung (1) insbesondere nach einem der vorhergehenden Ansprüche, **dadurch gekennzeichnet, dass** die Integrationseinheit (4) eine elektronische Komponente (5) umfasst, die als Sende- und/oder Empfangseinheit (5d) kabellos mit einer Antenne (9) in Verbindung steht.

7. Anordnung (1) nach einem der vorhergehenden Ansprüche, **dadurch gekennzeichnet, dass** der Antenne (100) wenigstens eine Sende- und/oder Empfangseinheiten (103) zugeordnet ist, die einerseits zur Kommunikation mit der als Sende- und/oder Empfangseinheit (102) ausgebildeten elektronischen Komponente (5) der Integrationseinheit (4) ausgebildet ist und/oder andererseits zur Kommunikation mit einer zu einem Funknetz (101) gehörenden Sende- und/oder Empfangseinheit (105) dient.

8. Anordnung (1) nach einem der vorhergehenden Ansprüche, **dadurch gekennzeichnet, dass** die Kommunikation der Antenne (100) mit der als Sende- und/oder Empfangseinheit (102) ausgebildeten elektronischen Komponente (5) der Integrationseinheit (4) mit einer im Milliwattbereich liegenden Sendeleistung (S1, S4) erfolgt und/oder die Kommunikation mit einer zum Funknetz (101) gehörenden Sende-und/oder Empfangseinheit (105) mit einer im Wattbereich liegenden Sendeleistung (S2, S3) erfolgt.

9. Anordnung (1) nach einem der vorhergehenden Ansprüche, **dadurch gekennzeichnet, dass** die Integrationseinheit (4) wenigstens eine Empfangseinheit (102) für den Empfang von im Milliwattbereich liegenden Sendesignalen (S4) des Funktelefons (2a) und/oder eine Sendeeinheit (102) für die Aussendung von im Wattbereich liegenden Sendesignalen (S6) zu einem Funknetz (101) aufweist, wobei der Empfang der Sendesignale (S7) des Funknetzes (101) direkt vom Funktelefon (2a) erfolgt.

10. Anordnung (1) nach einem der vorhergehenden Ansprüche, **dadurch gekennzeichnet, dass** die Empfangseinheit (102) der Integrationseinheit (4) für den Empfang von im Wattbereich liegenden Sendesignalen (S10) des Funknetzes (101) und/oder die Sendeeinheit (102) zum Aussenden von im Milliwattbereich liegenden Sendesignalen (S11) zum Funktelefon (2a) ausgebildet ist.
